# EUROPÄISCHE PATENTSCHRIFT

(11) **EP 3 091 331 B1**
(45) Veröffentlichungstag und Bekanntmachung des Hinweises auf die Patenterteilung: **04.10.2017**
(21) Anmeldenummer: 16158955.1
(22) Anmeldetag: 07.03.2016
(51) Int. Cl.: G01B 3/12, G01D 11/30

(54) **MESSVORRICHTUNG ZUM MESSEN EINES WEGES UND/ODER EINER GESCHWINDIGKEIT UND EIN VERFAHREN ZUM MONTIEREN DERSELBEN**
MEASURING DEVICE FOR MEASURING A PATH AND/OR A SPEED AND METHOD FOR MOUNTING THE SAME
DISPOSITIF DE MESURE D'UNE VOIE ET/OU D'UNE VITESSE ET SON PROCÉDÉ DE MONTAGE

(30) Priorität: 08.05.2015 DE 102015107243
(43) Veröffentlichungstag der Anmeldung: 09.11.2016
(73) Patentinhaber: SICK STEGMANN GmbH, 78166 Donaueschingen (DE)
(72) Erfinder: Gao, Xuezhong Rick, 757438 Singapur (SG); Chan, Michelle, 757438 Singapur (SG); Amparo, Marianne, 757438 Singapur (SG)
(74) Vertreter: Ludewigt, Christoph

(56) Entgegenhaltungen:
- DE-A1- 2 105 654
- FR-A1- 2 238 913
- US-A- 3 740 855
- US-A- 3 838 519

## Beschreibung

Die Erfindung betrifft eine Messvorrichtung zum Messen eines Weges und/oder einer Geschwindigkeit eines sich relativ zu der Messvorrichtung bewegenden Objektes und ein Verfahren zum Montieren derselben in einer Betriebsposition.

Eine solche Messvorrichtung wird in der Automatisierungsindustrie dazu verwendet, den Weg und/oder die Geschwindigkeit eines Objektes, beispielsweise eines Transportbandes, zu bestimmen, wobei sich das Transportband relativ zu der Messvorrichtung bewegt. Hierzu wird die Messvorrichtung an einem Bauteil befestigt, das sich ortsfest zu dem Transportband befindet.

Die Messvorrichtung besteht im Wesentlichen aus einem Messrad, das eine vorzugsweise gummierte, gerändelte oder in ähnlicher Weise aufbereitete Lauffläche aufweist und an einer Welle eines Drehgebers befestigt ist. Die vorzugsweise gummierte, gerändelte oder in ähnlicher Weise aufbereitete Lauffläche des Messrads ist auf dem Transportband, insbesondere auf der Oberfläche des Transportbands, reibschlüssig aufgesetzt.

Um eine genaue Messung des Weges und/oder der Geschwindigkeit zu erhalten, ist ein schlupffreier Kontakt zwischen dem Transportband und dem Messrad erforderlich.

Hierbei ist zum Befestigen der Messvorrichtung an dem ortsfesten Bauteil eine Halteeinheit, die nachfolgend auch als Federarm bezeichnet wird, vorgesehen, die auf einer ersten Seite drehfest mit der Messvorrichtung befestigt und auf der der ersten Seite gegenüberliegenden zweiten Seite durch eine Drehlagerung derart drehbar mit dem Bauteil befestigt ist, so dass die Halteeinheit mittels eines Federelements das Messrad gegen die Oberfläche des Transportbands mit einer vorgegebenen Kraft drückt.

Durch die Bewegung des Transportbands wird das Messrad der Messvorrichtung mitbewegt, so dass die Drehung des Messrads über die Welle an dem Drehgeber drehwinkelgenau weitergegeben wird, der den Weg und/oder die Geschwindigkeit des Messrads und somit des Transportbands ermitteln kann. Ferner wird durch die vorgegebene Kraft des Federelements der Halteeinheit eine schlupffreie Messung gewährleistet.

Bei einer herkömmlichen Montage der Messvorrichtung in der Betriebsposition wird eine Messlehre zwischen dem Messrad und der Oberfläche des Transportbands angeordnet und die Drehlagerung bis zu einem mechanischen Anschlag der Drehlagerung vorgespannt, so dass nach einem Festdrehen der Messvorrichtung an dem ortsfesten Bauteil das Federelement die vorgegebene Kraft aufweist.

Hierbei wird das Federelement während der Montage kurzzeitig überdehnt. Ferner werden mechanische Anschläge in der Drehlagerung notwendig, um eine Beschädigung des Federelements bzw. eine zu starke Vorspannung des Federelements zu vermeiden. DE2105654 zeigt eine bekannte Messvorrichtung bei welcher das Messrad mittels einer Spiralfeder gegen das zu messende Objekt gedrückt wird, wobei die Federkraft der Spiralfeder mittels einer Stellschraube eingestellt wird. Es ist eine Aufgabe der Erfindung, eine Messvorrichtung zum Messen eines Weges und/oder einer Geschwindigkeit eines sich relativ zu der Messvorrichtung bewegenden Objektes derart zu verbessern, dass eine Montage der Messvorrichtung in ihrer Betriebsposition einfach und ohne Überdehnung des Federelements durchführbar ist.

Die Aufgabe wird erfindungsgemäß gelöst durch eine Messvorrichtung zum Messen eines Weges und/oder einer Geschwindigkeit eines sich relativ zu der Messvorrichtung bewegenden Objektes, mit einem Messrad, das an einer Welle eines Drehgebers befestigt ist und mit einer Lauffläche auf dem Objekt aufgesetzt ist, und einer Halteeinheit zum Befestigen der Messvorrichtung an einem ortsfesten Bauteil, die auf einer ersten Seite drehfest mit der Messvorrichtung verbunden und auf der der ersten Seite gegenüberliegenden zweiten Seite durch eine Drehlagerung derart drehbar mit dem Bauteil verbunden ist, so dass die Halteeinheit mittels eines Federelements, das mit einem ersten Ende auf der ersten Seite der Halteeinheit verbunden ist, das Messrad gegen das Objekt drückt, wobei die Drehlagerung eine erste Durchbohrung zum Aufnehmen eines zweiten Endes des Federelements und eine zweite Durchbohrung zum zeitweiligen Aufnehmen eines Werkzeugs und zum manuellen Drehen der Drehlagerung mittels des Werkzeugs aufweist.

Dies hat weiterhin den Vorteil, dass keine mechanischen Anschläge in der Drehlagerung oder an der Halteeinheit vorgesehen werden müssen.

Gemäß einem bevorzugten Ausführungsbeispiel weist die Halteeinheit auf der zweiten Seite eine Durchbohrung auf, die koaxial zu der zweiten Durchbohrung der Drehlagerung ist und auf beiden Enden jeweils eine Senkung mit einem definierten Öffnungswinkel aufweist. Insbesondere entspricht der definierte Öffnungswinkel einer vorgegebenen drehbaren Drehung der Drehlagerung.

Gemäß einem weiteren bevorzugten Ausführungsbeispiel entspricht die vorgegebene drehbare Drehung der Drehlagerung einer definierten Vorspannkraft des Federelements.

Gemäß einem weiteren bevorzugten Ausführungsbeispiel ist durch das manuelle Drehen der Drehlagerung mittels des Werkzeugs in der zweiten Durchbohrung das Federelement in einen definierten vorgespannten Zustand bringbar und durch Festziehen einer Schraube auf der Seite des ortsfesten Bauteils das Federelement in dem definierten vorgespannten Zustand fixierbar.

Hieraus ergibt sich der Vorteil, dass keine zusätzlichen Hilfsgeräte, wie z. B. eine Messlehre, für das Vorspannen des Federelements entsprechend der geforderten Andruckkraft im Betrieb benötigt werden.

Gemäß einem weiteren bevorzugten Ausführungsbeispiel dienen die Wandkanten der Durchbohrung auf der zweiten Seite der Halteeinheit als Drehanschlag für das Werkzeug beim manuellen Drehen der Drehlagerung. Hierdurch ist die Herstellung der Drehlagerung und der Halteeinheit kostengünstig und einfach.

Gemäß einem weiteren bevorzugten Ausführungsbeispiel ist das Federelement eine Blattfeder. Vorteilhafterweise ist die zweite Durchbohrung der Drehlagerung in einem Winkel, vorzugsweise von 90°, zu der ersten Durchbohrung der Drehlagerung angeordnet.

Es ist ferner eine Aufgabe der Erfindung, ein Verfahren zum Montieren der Messvorrichtung in ihrer Betriebsposition mit der erforderlichen Vorspannkraft bereitzustellen, das einfach durchführbar ist und eine Überdehnung des Federelements vermeidet.

Die Aufgabe wird erfindungsgemäß durch ein Verfahren zum Montieren einer Messvorrichtung in einer Betriebsposition gelöst, das die Schritte aufweist: Befestigen des Federelements auf der ersten Seite der Halteeinheit, spannungsfreies Einführen und Fixieren des Federelements auf der zweiten Seite der Halteeinheit in der Drehlagerung, Einführen des Werkzeugs in die zweite Durchbohrung der Drehlagerung, Drehen der Drehlagerung und Vorspannen des Federelements entsprechend einer vorgegebenen Betriebsandruckkraft des Federelements, und Festziehen einer Schraube auf der Seite des ortsfesten Bauteil, so dass das Federelement mit der vorgegebenen Betriebsandruckkraft fixiert ist.

Die erfindungsgemäße Messvorrichtung und das erfindungsgemäße Verfahren können auf ähnliche Weise durch weitere Merkmale ausgestaltet werden und zeigen dabei ähnliche Vorteile. Derartige weitere Merkmale sind beispielhaft, aber nicht abschließend, in den sich an dem unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer erfindungsgemäßen Messvorrichtung;
- Fig. 2: eine schematische Seitenansicht auf die erfindungsgemäße Messvorrichtung; und
- Fig. 3: eine schematische perspektivische Seitenansicht der erfindungsgemäßen Messvorrichtung.

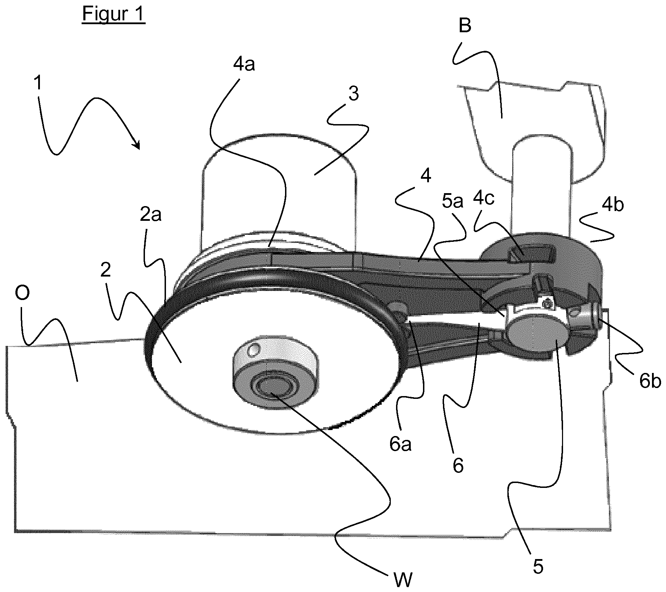

In der Figur 1 ist eine schematische Darstellung einer erfindungsgemäßen Messvorrichtung 1 zum Messen eines Weges und/oder einer Geschwindigkeit eines sich relativ zu der Messvorrichtung 1 bewegenden Objektes O, insbesondere in dem dargestellten Ausführungsbeispiel ein Transportband, gezeigt.

Die erfindungsgemäße Messvorrichtung 1 umfasst ein Messrad 2, einen Drehgeber 3 und eine Halteeinheit 4, wobei das Messrad 2 an einer Welle W des Drehgebers 3 befestigt ist. Die Halteeinheit 4 ist aus einer ersten Seite 4a drehfest mit der Messvorrichtung 1, insbesondere mit dem Drehgeber 3, verbunden und auf der der ersten Seite 4a gegenüberliegenden zweiten Seite 4b durch eine Drehlagerung 5 mit einem gegenüber dem Objekt O ortsfesten Bauteil B verbunden. Die Drehlagerung 5 ist vorzugsweise eine Zylinderbuchse, die senkrecht zu dem ortsfesten Bauteil B befestigt und senkrecht zu einer Bewegungsrichtung des Objektes O angeordnet ist.

Die Drehlagerung 5 ermöglicht der Halteeinheit 4 sich auf einer Ebene, die senkrecht zu einer Oberfläche des Objektes O ist, gegenüber dem ortfesten Bauteil B zu drehen, so dass das Messrad 2 mit einer vorzugsweise gummierten, gerändelten oder in ähnlicher Weise aufbereiteten Lauffläche 2a auf die Oberfläche des Objektes O aufsetzt, um mit der Bewegung des Objektes O reibschlüssig mitzudrehen und Unebenheiten der Oberfläche des Objektes O auszugleichen.

Die Halteeinheit 4 weist ein Federelement 6 auf, das zwischen der ersten Seite 4a und der zweiten Seite 4b der Halteeinheit 4 aufgespannt ist. Hierbei ist ein erstes Ende 6a des Federelements 6 auf der ersten Seite 4a der Halteeinheit 4 fest verbunden und ein zweites Ende 6b des Federelements 6 auf der zweiten Seite 4b der Halteeinheit 4 in der Drehlagerung 5 fixiert.

Das zweite Ende 6b des Federelements 6 ist in eine erste Durchbohrung 5a der Drehlagerung 5 eingesteckt, so dass das Federelement 6 von der ersten Seite 4a der Halteeinheit 4 bis zu der zweiten Seite 4b der Halteeinheit 4 entspannt angeordnet ist. Das zweite Ende 6b des Federelements 6 ist vorzugsweise durch eine Hülse oder eine Schraube in der ersten Durchbohrung 5a der Drehlagerung 5 fixiert. Die erste Durchbohrung 5a der Drehlagerung 5 ist im Wesentlichen waagerecht und insbesondere parallel zu der Oberfläche des Objektes O angeordnet.

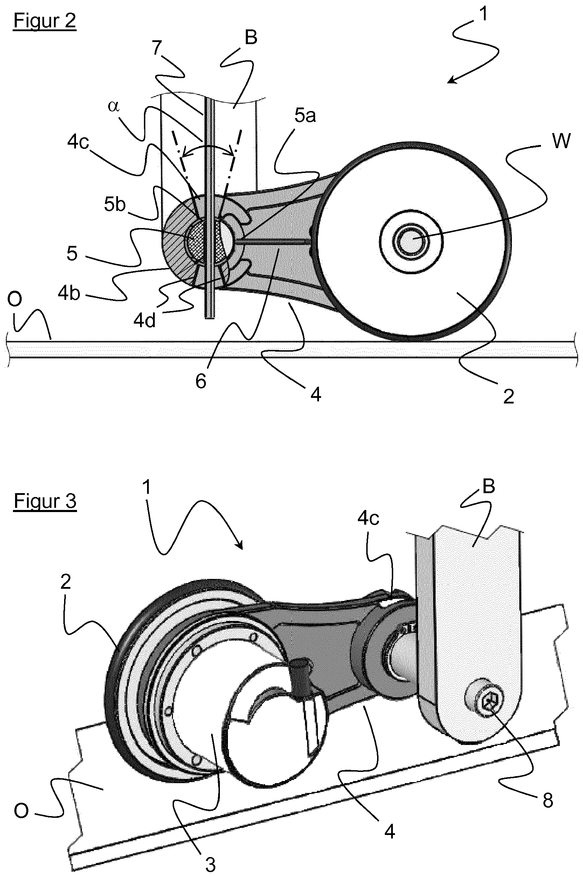

Figur 2 zeigt eine schematische Seitenansicht auf die erfindungsgemäße Messvorrichtung 1. Hierbei weist die Drehlagerung 5 erfindungsgemäß eine zweite Durchbohrung 5b auf, die vorteilhafterweise in einem Winkel von 90° zu der ersten Durchbohrung 5a der Drehlagerung 5 angeordnet ist.

Gemäß dem gezeigten Ausführungsbeispiel weist das zweite Ende 4b der Halteeinheit 4 eine Durchbohrung 4c auf, die koaxial zu der zweiten Durchbohrung 5b der Drehlagerung 5 vorgesehen ist. Hierbei weist die Durchbohrung 4c der Halteeinheit 4 auf beiden Enden jeweils eine Senkung mit einem definierten Öffnungswinkel α auf. Der definierte Öffnungswinkel α entspricht einer vorgegebenen drehbaren Drehung der Drehlagerung 5 gegenüber dem ortsfesten Bauteil B.

Wie in der Figur 2 gezeigt, dient die zweite Durchbohrung 5b der Drehlagerung 5 zum zeitweiligen Aufnehmen eines Werkzeugs 7 bei der Montage der Messvorrichtung 1 in ihrer Betriebsposition. Mittels des eingeführten Werkzeugs 7 wird die Drehlagerung 5 manuell gegenüber dem ortsfesten Bauteil B gedreht, so dass das Federelement 6 in einen definierten vorgespannten Zustand bringbar ist.

Hierbei dienen die Wandkanten 4d der Durchbohrung 4c auf der zweiten Seite 4b der Halteeinheit 4 als Drehanschlag für das Werkzeug 7.

Durch Vorgabe des definierten Öffnungswinkels α der Senkungen der Durchbohrung 4c können eine definierte Vorspannkraft des Federelements 6 eingestellt und eine Überdehnung des Federelements 6 bei der Montage der Messvorrichtung 1 vermieden werden. Weiterhin kann auf die Verwendung eines zusätzlichen Einstellgeräts, wie z.B. die erwähnte Messlehre, verzichtet werden.

Dies bedeutet wiederum, dass die durch den Öffnungswinkel α vorgegebene drehbare Drehung der Drehlagerung 5 vorteilhafterweise einer definierten Vorspannkraft des Federelements 6 entspricht.

Durch die Aufhängung des Federelements 6 der Halteeinheit 4 drückt das Federelement 6 das Messrad 2 mit einer definierten Vorspannkraft bzw. mit einer vorgegebenen definierten Andruckkraft auf die Oberfläche des Objektes O, so dass die Bewegung des Objektes O ohne Schlupf von der erfindungsgemäßen Messvorrichtung 1 erfasst werden kann.

Nach dem manuellen Drehen der Drehlagerung 5 mittels des Werkzeugs 7 und damit verbundenen Vorspannen des Federelements 6 wird durch Festziehen einer, in der Figur 3 gezeigten, Schraube 8 auf der Seite des ortsfesten Bauteils B das Federelement 6 in dem definierten vorgespannten Zustand fixiert, so dass die Messvorrichtung 1 in ihrer Betriebsposition mit der vorgegebenen Andruckkraft des Federelements 6 montiert ist.

Nach dem Festziehen der Schraube 8 kann das Werkzeug 7 wieder entfernt werden.

In der Figur 3 ist eine schematische perspektivische Seitenansicht der erfindungsgemäßen Messvorrichtung 1 in ihrer Betriebsposition gezeigt. Für die Montage der erfindungsgemäßen Messvorrichtung 1 sind lediglich das Werkzeug 7, in Form z. B. eines Schraubendrehers oder eines Inbusschlüssels (auch *"Allen key"* genannt), und ein Werkzeug zum Festziehen der Schraube 8 nötig.

Gemäß dem erfindungsgemäßen Verfahren zum Montieren der Messvorrichtung 1 in ihrer Betriebsposition, wird ein Ende 6a des Federelements 6 auf der ersten Seite 4a der Halteeinheit 4 befestigt. Das andere Ende 6b des Federelements 6 wird spannungsfrei auf der zweiten Seite 4b der Halteeinheit 4 in die erste Durchbohrung 5a der Drehlagerung 5 eingeführt und in der ersten Durchbohrung 5a der Drehlagerung 5 fixiert.

Dann wird das Werkzeug 7 durch die Durchbohrung 4c der Halteeinheit 4 in die zweite Durchbohrung 5b der Drehlagerung 5 eingeführt und maximal bis zu der Wandkante 4d der Senkungen der Durchbohrung 4c der Halteeinheit 4 manuell gedreht, so dass die Drehlagerung 5 manuell gedreht und damit das Federelement 6 entsprechend der vorgegebenen Betriebsandruckkraft vorgespannt werden.

D.h. je manuelle Drehung des Werkzeugs 7 in der Durchbohrung 4c der Halteeinheit 4 kann eine entsprechende Vorspannkraft bzw. Betriebsandruckkraft des Federelements 6 eingestellt werden.

Nach dem manuellen Drehen der Drehlagerung 5 wird die Schraube 8 auf der Seite des ortsfesten Bauteils B festgezogen, so dass die erfindungsgemäße Messvorrichtung 1 in ihrer Betriebsposition bzw. das Federelement 6 mit der eingestellten, insbesondere vorgegebenen, Betriebsandruckkraft fixiert sind.

Das Werkzeug 7 kann auf der zweiten Durchbohrung 5b der Drehlagerung 5 entfernt werden, wodurch die Montage und das Einstellen der Betriebsandruckkraft der erfindungsgemäßen Messvorrichtung 1 beendet sind, ohne das Federelement 6 zu überdehnen und zusätzliche Messwerkzeuge zu gebrauchen.

### Bezugszeichenliste

- 1: Messvorrichtung
- 2: Messrad
- 2a: Lauffläche
- 3: Drehgeber
- 4: Halteeinheit
- 4a: Erste Seite der Halteeinheit
- 4b: Zweite Seite der Halteeinheit
- 4c: Durchbohrung der Halteeinheit
- 4d: Wandkanten der Durchbohrung der Halteeinheit
- 5: Drehlagerung
- 5a: Erste Durchbohrung
- 5b: Zweite Durchbohrung
- 6: Federelement
- 6a: Erstes Ende des Federelements
- 6b: Zweites Ende des Federelements
- 7: Werkzeug
- 8: Schraube
- B: Ortfestes Bauteil
- O: Objekt
- W: Welle
- α: Öffnungswinkel

## Patentansprüche

1. Messvorrichtung (1) zum Messen eines Weges und/oder einer Geschwindigkeit eines sich relativ zu der Messvorrichtung (1) bewegenden Objektes (O), mit einem Messrad (2), das an einer Welle (W) eines Drehgebers (3) befestigt ist und mit einer Lauffläche (2a) auf dem Objekt (O) aufgesetzt ist, und
einer Halteeinheit (4) zum Befestigen der Messvorrichtung (1) an einem ortsfesten Bauteil (B), die auf einer ersten Seite (4a) drehfest mit der Messvorrichtung (1) verbunden und auf der der ersten Seite (4a) gegenüberliegenden zweiten Seite (4b) durch eine Drehlagerung (5) derart drehbar mit dem Bauteil (B) verbunden ist, so dass die Halteeinheit (4) mittels eines Federelements (6), das mit einem ersten Ende (6a) auf der ersten Seite (4a) der Halteeinheit (4) verbunden ist, das Messrad (2) gegen das Objekt (O) drückt, wobei die Drehlagerung (5) eine erste Durchbohrung (5a) zum Aufnehmen eines zweiten Endes (6b) des Federelements (6) und eine zweite Durchbohrung (5b) zum zeitweiligen Aufnehmen eines Werkzeugs (7) und zum manuellen Drehen der Drehlagerung (5) mittels des Werkzeugs (7) aufweist.

2. Messvorrichtung (1) nach Anspruch 1, wobei die Halteeinheit (4) auf der zweiten Seite (4b) eine Durchbohrung (4c) aufweist, die koaxial zu der zweiten Durchbohrung (5b) der Drehlagerung (5) ist und auf beiden Enden jeweils eine Senkung mit einem definierten Öffnungswinkel (α) aufweist.

3. Messvorrichtung (1) nach Anspruch 2, wobei der definierte Öffnungswinkel (α) einer vorgegebenen drehbaren Drehung der Drehlagerung (5) entspricht.

4. Messvorrichtung (1) nach Anspruch 3, wobei die vorgegebene drehbare Drehung der Drehlagerung (5) einer definierten Vorspannkraft des Federelements (6) entspricht.

5. Messvorrichtung (1) nach einem der vorhergehenden Ansprüche, wobei durch das manuelle Drehen der Drehlagerung (5) mittels des Werkzeugs (7) in der zweiten Durchbohrung (5b) das Federelement (6) in einen definierten vorgespannten Zustand bringbar ist und durch Festziehen einer Schraube (8) auf der Seite des ortsfesten Bauteils (B) das Federelement (6) in dem definierten vorgespannten Zustand fixierbar ist.

6. Messvorrichtung (1) nach einem der vorhergehenden Ansprüche, wobei Wandkanten (4d) der Durchbohrung (4c) auf der zweiten Seite der Halteeinheit (4) als Drehanschlag für das Werkzeug (7) beim manuellen Drehen der Drehlagerung (5) dienen.

7. Messvorrichtung (1) nach einem der vorhergehenden Ansprüche, wobei das Federelement (6) eine Blattfeder ist.

8. Messvorrichtung (1) nach einem der vorhergehenden Ansprüche, wobei die zweite Durchbohrung (5b) der Drehlagerung (5) in einem Winkel, vorzugsweise von 90°, zu der ersten Durchbohrung (5a) der Drehlagerung (5) angeordnet ist.

9. Verfahren zum Montieren einer Messvorrichtung (1) nach einem der vorhergehenden Ansprüche in einer Betriebsposition, mit den Schritten:
a) Befestigen des Federelements (6) auf der ersten Seite (4a) der Halteeinheit (4),
b) spannungsfreies Einführen und Fixieren des Federelements (6) auf der zweiten Seite (4b) der Halteeinheit (4) in der Drehlagerung (5),
c) Einführen des Werkzeugs (7) in die zweite Durchbohrung (5b) der Drehlagerung (5),
d) Drehen der Drehlagerung (5) und Vorspannen des Federelements (6) entsprechend einer vorgegebenen Betriebsandruckkraft des Federelements (6), und
e) Festziehen einer Schraube (8) auf der Seite des ortsfesten Bauteil (B), so dass das Federelement (6) mit der vorgegebenen Betriebsandruckkraft fixiert ist.

## Claims

1. Measuring device (1) for measuring a path and/or a speed of an object (O) which moves relative to the measuring device (1), having
a measuring wheel (2) which is mounted on a shaft (W) of a rotary encoder (3) and is placed on the object (O) with a running surface (2a), and
a holding unit (4) for fastening the measuring device (1) to a stationary component (B) which holding unit is connected on a first side (4a) in a rotationally fixed manner to the measuring device (1), and on the second side (4b) opposite the first side (4a) the holding unit is connected rotatably to the component (B) by means of a rotary bearing (5), so that the holding unit (4) is connected by means of a spring element (6) which is connected by a first end (6a) on the first side (4a) and presses measuring wheel (2) towards the object (O), whereby the rotary bearing (5) comprises a first through bore (5a) for receiving a second end (6b) of the spring element (6) and a second through bore (5b) for temporarily receiving a tool (7) and for manually rotating the rotary bearing (5) by means of the tool (7).

2. Measuring device according to claim 1, wherein the holding unit (4) on the second side (4b) comprises a through-bore (4c) which is coaxial with the second through-bore (5b) of the rotary bearing (5) and comprises at both ends a recess with a defined opening angle (α), respectively.

3. Measuring device (1) according to claim 2, wherein the defined opening angle (α) corresponds to a predetermined rotatable rotation of the rotary bearing (5).

4. Measuring device (1) according to claim 3, wherein the predetermined rotatable rotation of the rotary bearing (5) corresponds to a defined biasing force of the spring element (6).

5. Measuring device (1) according to claim 1, wherein the spring element (6) can be brought into a defined prestressed state by the manual rotation of the rotary bearing (5) by means of the tool (7) in the second through-bore (5b) and the spring element (6) can be fixed in the defined prestressed state by tightening a screw (8) on the side of the stationary component (B).

6. Measuring device (1) according to any preceding claims, wherein wall edges (4d) of the through-bore (4c) on the second side of the holding unit (4) serve as a rotary stop for the tool (7) during manual rotation of the rotary bearing (5).

7. Measuring device (1) according to any preceding claim, wherein the spring element (6) is a leaf spring.

8. Measuring device (1) according to any preceding claim, wherein the second through-bore (5b) of the rotary bearing (5) is arranged at an angle, preferably 90°, to the first through-bore (5a) of the rotary bearing (5).

9. Method for mounting a measuring device (1) according to any preceding claim in an operating position, comprising the steps of:
a) fixing the spring element (6) on the first side (4a) of the holding unit (4),
b) tension-free insertion and fixing of the spring element (6) on the second side (4b) of the holding unit (4) in the rotary bearing (5),
c) inserting the tool (7) into the second through-bore (5b) of the rotary bearing (5),
d) rotating the rotary bearing (5) and pretensioning the spring element (6) according to a predetermined operating pressure force of the spring element (6), and
e) tightening a screw (8) on the side of the stationary component (B) such that the spring element (6) is fixed with the predetermined operating pressure.

## Revendications

1. Dispositif de mesure (1) pour mesurer un trajet et/ou une vitesse d'un objet (O) qui se déplace par rapport au dispositif de mesure (1), ayant
une roue de mesure (2) qui est montée sur un arbre (W) d'un codeur rotatif (3) et est placée sur l'objet (O) avec une surface de roulement (2a) et
une unité de maintien (4) pour fixer le dispositif de mesure (1) à un composant stationnaire (B), don't l'unité de maintien est reliée sur un premier côté (4a) de manière fixe en rotation au dispositif de mesure (1) et l'unité de maintien est reliée de manière rotative au composant (B) au moyen d'un palier rotatif (5) sur la seconde côté (4b) opposé au premier côté (4a), de sorte que l'unité de maintien (4) est reliée au moyen d'un élément à ressort (6) qui est relié par une première extrémité (6a) sur le premier côté (4a) et presse la roue de mesure (2) vers l'objet (O), le palier rotatif (5) comprenant un premier alésage traversant (5a) pour recevoir une deuxième extrémité (6b) de l'élément à ressort (6) et un second alésage traversant (5b) pour recevoir temporairement un outil (7) et pour faire tourner manuellement le palier rotatif (5) au moyen de l'outil (7).

2. Dispositif de mesure selon la revendication 1, dans lequel l'unité de maintien (4) comprend un alésage traversant (4c) sur le second côté (4b) qui est coaxial envers le second alésage traversant (5b) du palier rotatif (5) et respectivement comporte un évidement avec un angle d'ouverture défini (α) aux deux extrémités.

3. Dispositif de mesure (1) selon la revendication 2, dans lequel l'angle d'ouverture défini (α) correspond à une rotation rotative prédéterminée du palier rotatif (5).

4. Dispositif de mesure (1) selon la revendication 3, dans lequel la rotation rotative prédéterminée du palier rotatif (5) correspond à une force de sollicitation définie de l'élément à ressort (6).

5. Dispositif de mesure (1) selon l'une des revendications pécédentes, dans lequel l'élément à ressort (6) peut être amené dans un état précontraint défini par la rotation manuelle du palier rotatif (5) au moyen de l'outil (7) dans le deuxième passage (5b) et l'élément à ressort (6) peut être fixés à l'état précontraint défini en serrant une vis (8) sur le côté du composant stationnaire (B).

6. Dispositif de mesure (1) selon l'une des revendications précédentes, dans lequel les bords de paroi (4d) de l'alésage traversant (4c) sur le deuxième côté de l'unité de maintien (4) servent de butée rotative pour l'outil (7) pendant la rotation manuelle du palier rotatif (5).

7. Dispositif de mesure (1) selon l'une des revendications précédentes, dans lequel l'élément à ressort (6) est un ressort à lame.

8. Dispositif de mesure (1) selon l'une des revendications précédentes, dans lequel le deuxième alésage traversant (5b) du palier rotatif (5) est agencé d'un angle, de préférence de 90°, envers le premier alésage traversant (5a) du palier rotatif (5).

9. Procédé de montage d'un dispositif de mesure (1) selon l'une des revendications précédentes dans une position de fonctionnement, comprenant les étapes consistant à:
a) fixer l'élément à ressort (6) sur le premier côté (4a) de l'unité de maintien (4),
b) insertion et fixation sans tension de l'élément à ressort (6) sur le deuxième côté (4b) de l'unité de maintien (4) dans le palier rotatif (5),
c) insertion de l'outil (7) dans le second alésage traversant (5b) du palier rotatif (5),
d) faire tourner le palier rotatif (5) et précontraindre l'élément à ressort (6) selon une force de pression de fonctionnement prédéterminée de l'élément à ressort (6), et
e) serrer une vis (8) sur le côté du composant stationnaire (B) de sorte que l'élément à ressort (6) soit fixé avec la pression de fonctionnement prédéterminée.
